# EUROPÄISCHE PATENTSCHRIFT

(11) **EP 3 306 173 B1**
(45) Veröffentlichungstag und Bekanntmachung des Hinweises auf die Patenterteilung: **27.02.2019**
(21) Anmeldenummer: 17186242.8
(22) Anmeldetag: 15.08.2017
(51) Int. Cl.: F16P 3/08

(54) **SICHERHEITSSYSTEM MIT EINEM SICHERHEITSSCHALTER**
SAFETY SYSTEM WITH A SAFETY SWITCH
SYSTÈME DE SÉCURITÉ DOTÉ D'UN DISPOSITIF DE SÉCURITÉ PAR COUPURE

(30) Priorität: 07.10.2016 DE 102016119049
(43) Veröffentlichungstag der Anmeldung: 11.04.2018
(73) Patentinhaber: Sick AG, 79183 Waldkirch (DE)
(72) Erfinder: Schwarz, Adrian, 79215 Elzach (DE)

(56) Entgegenhaltungen:
- EP-A1- 2 871 402
- EP-A2- 1 956 284
- WO-A1-2011/090485
- WO-A1-2014/093963

## Beschreibung

Die vorliegende Erfindung betrifft ein Sicherheitssystem mit einem Sicherheitsschalter nach dem Oberbegriff von Anspruch 1. Sicherheitsschalter ist eine marktübliche und synonyme Bezeichnung für Verriegelungseinrichtung oder Verriegelungseinheit mit Zuhaltung gemäß der Norm EN ISO 14119.

In der Industrie werden Maschinen eingesetzt, die für Menschen gefährlich sein können. Beispiele für solche Maschinen sind Pressen oder Roboter, die für den Menschen gefahrbringende Bewegungen ausführen. Diese Bereiche werden beispielsweise durch mechanische Zäune oder Lichtgitter abgesichert. Um dennoch in den Bereich der gefährlichen Maschine zu gelangen zu können, sind bewegliche Schutzeinrichtungen, beispielsweise Türen vorgesehen, die mit Sicherheitsschaltern versehen sind. Wird die Tür geöffnet, sorgt der Sicherheitsschalter für eine Abschaltung der Maschine.

Derartige Sicherheitsschalter weisen weiter eine Zuhaltung auf, so dass die Türe blockiert ist und gar nicht geöffnet werden kann. Lediglich durch einen Stoppbefehl an der Türe oder an dem zentralen HMI der Maschine kann die Zuhaltung deaktiviert werden, um Zutritt zu dem Gefahrenbereich zu erhalten, wobei die gefahrbringende Bewegung abgeschaltet wird. Bei nachlaufenden Maschinen bzw. Prozessen muss die Türe so lange zugehalten werden, bis die Gefahr in der Maschine nicht mehr besteht.

Die Türen an Maschinen dienen als Schutzeinrichtung, nämlich als bewegliche Schutzeinrichtung im Sinne der Maschinenrichtlinie.

Die Überwachung und Zuhaltung der Türe wird mit am Markt verfügbaren Sicherheitsschaltern mit Zuhaltung realisiert. Es ist beispielsweise eine Bauart 2 bzw. eine Bauart 4 nach der Norm ISO 14119 bekannt. Diese Schalter basieren zum einen auf mechanischem Prinzip, z. B. der Sicherheitsschalter i10Lock von der Fa. SICK oder beispielsweise auf RFID Technologie wie der Sicherheitsschalter mit Zuhaltung TR10 Lock der Fa. SICK.

Soll nun der Zugang zur Maschine ermöglicht werden, wird typischerweise mit zusätzlichen dezentralen Bedientasten oder über eine Mensch-Maschine-Schnittstelle eine Anforderung zum Stopp der Maschine gestellt.

Der Nachteil dieser Technik besteht darin, dass bei einer dezentralen Möglichkeit sowie bei einer nicht zugangsgeschützten Bedienmöglichkeit per Mensch-Maschine-Schnittstelle der Personenkreis, welcher diese Anforderung zum Stopp der Maschine stellen könnte, nicht eingegrenzt werden kann.

Die EP 2 871 402 A1 offenbart ein Sicherheitssystem mit einem Sicherheitsschalter zum Überwachen eines sicheren Schutzeinrichtungszustandes einer beweglichen Schutzeinrichtung, mit einem Grundgehäuse, das aus zumindest zwei Teilkörpern besteht, die zueinander positionierbar sind, wobei ein Signalempfänger in einem Teilkörper und ein Signalgeber in dem anderen Teilkörper vorgesehen sind, so dass ein sicherer Zustand der Schutzeinrichtung mittels einer Auswerteeinheit erfassbar ist.

Aufgabe der Erfindung ist es, ein verbessertes Sicherheitssystem mit einem Sicherheitsschalter zur Verfügung zu stellen. Eine weitere Aufgabe der Erfindung ist es, den Personenkreis, welcher die Anforderung zum Stoppen der Maschine stellen kann, einzugrenzen.

Die Aufgabe wird gemäß Anspruch 1 gelöst durch ein Sicherheitssystem mit einem Sicherheitsschalter zum Überwachen eines sicheren Schutzeinrichtungszustandes einer beweglichen Schutzeinrichtung, mit einem Grundgehäuse, das aus zumindest zwei Teilkörpern besteht, die zueinander positionierbar sind, wobei ein Signalempfänger in einem Teilkörper und ein Signalgeber in dem anderen Teilkörper vorgesehen sind, so dass ein sicherer Zustand der Schutzeinrichtung mittels einer Auswerteeinheit erfassbar ist, mit einer Verriegelungseinheit mit mindestens einem Verriegelungselement zum Verriegeln oder Entriegeln der Schutzeinrichtung, wobei mindestens ein mobiler Identifikationstransponder vorgesehen ist, mindestens eine im Sicherheitsschalter angeordnete Transponder-Leseeinheit, welche mit der Auswerteeinheit verbunden ist, wobei die Auswerteeinheit oder eine externe zentrale Steuereinheit ausgebildet ist, nach Überprüfung und Verifikation des vom Identifikationstransponder empfangenen Transpondersignals die Verriegelungseinheit zu entriegeln oder verriegeln.

Gemäß der Erfindung findet die Identifikation dezentral im Feld bzw. an einer Anlage direkt an der sicheren Zuhaltung der Schutztüre oder über die externe zentrale Steuereinheit statt. Der Maschinenbediener kann speziell bei größeren Maschinen mit unterschiedlichen Berechtigungen ausgestattet werden, ohne dass die Bedienung über das zentrale HMI der Maschine stattfinden muss oder jeweils ein paralleles Identifikationssystem an der Türe installiert werden muss.

Bei der Anlage kann es sich beispielsweise um eine Industrieanlage zur Herstellung von Produkten handeln. Beispielsweise handelt es sich hierbei um einen Teil einer Produktionsanlage für Automobile. Bei der Anlage kann es sich auch um einen Teil einer Maschine oder um eine Anlage mit mehreren Maschinen handeln. Die Anlage weist einen Sicherheitsbereich auf, der nicht von Personen betreten werden darf, wenn die Anlage aktiv ist, da die Person durch Teile der Anlage gefährdet werden kann. Beispielsweise handelt es sich bei der Anlage um einen oder mehrere Roboter, deren gefährlicher Wirkungsbereich innerhalb des Sicherheitsbereiches liegt.

Bei dem Sicherheitssystem handelt es sich um ein Sicherheitssystem gemäß Maschinensicherheit, beispielsweise gemäß der Norm EN/ISO 13849-1 bzw. der Norm EN/IEC 62061, die beispielsweise den Rahmen für funktionale Sicherheit von sicherheitsbezogenen elektrischen Steuerungssystemen und deren Untersystemen an Maschinen bereitstellt.

Der Identifikationstransponder gemäß der Erfindung kann sehr einfach ausgebildet sein. Es handelt sich beispielsweise um ein handliches Gerät, das problemlos von einer Person getragen bzw. mitgeführt werden kann. Optional weist der Identifikationstransponder Bedienelemente und/oder mindestens ein Anzeigeelement auf. Optional weist der Sicherheitsschalter bzw. die Transponder-Leseeinheit Bedienelemente und/oder mindestens ein Anzeigeelement auf.

Weiter weist der Identifikationstransponder eine Auswerteeinheit auf. Die Auswerteeinheit ist beispielsweise durch einen Mikrocontroller gebildet. Weiter weist der Identifikationstransponder einen Speicher auf, um Daten auf dem Identifikationstransponder abzuspeichern.

In einer bevorzugten Ausführungsform der Erfindung ist mindestens die Kommunikation zwischen der Transponder-Leseeinheit und dem mobilen Identifikationstransponder sicherheitsgerichtet, wobei eine Überprüfung beispielsweise durch berechnete Checksummen und/oder durch eine redundante Informationsübertragung erfolgt.

Die Übertragung der Identifikation geschieht somit über eine sichere Kommunikation mit der Steuereinheit bzw. einer Sicherheitssteuerung.

Die Berechtigung wird der eindeutigen Identifikation bzw. ID des Identifikationstransponders zugeordnet. Damit kann ein unterschiedlicher Autorisierungsumfang durch den Identifikationstransponder und damit personenbezogen definiert werden. Dieser Berechtigungsumfang kann über den Sicherheitsschalter selbst und/oder über die Steuereinheit bzw. eine sichere Steuerung definiert und verwaltet werden. Beispielsweise kann der Berechtigungsumfang über eine Konfigurationsoberfläche definiert und verwaltet werden.

Bei der Verwaltung der Berechtigungen über die sichere Steuerung ist die sichere Kommunikation beispielsweise eine Kommunikation, die Performance Level nach EN ISO 13849 genügt oder erreicht.

Dabei kommt beispielsweise ein Sicherheitsprotokoll nach der Norm IEC 61784 zum Einsatz.

In Weiterbildung der Erfindung ist mittels des mobilen Identifikationstransponders ein Stoppbefehl, eine Resetfunktion, eine Startfunktion, und/oder eine Freigabe eines Sicherheitsbereichs ausführbar.

Beispielsweise ist die Auswerteeinheit ausgebildet, eine Aufforderung zum Stopp der Maschine an eine Maschinensteuerung zu übergeben.

Gemäß der Erfindung kann sich eine Person über den Identifikationstransponder bzw. einem persönlichen Chip mittels einer Identifikation identifizieren. Entsprechend einem Rechteprofil dieses persönlichen Identifikationstransponders ist die Auswerteeinheit dazu ausgebildet beispielsweise zu entscheiden, ob eine Person berechtigt ist einen Stopp der Maschine bzw. Anlage anzufordern sowie die Türe bzw. Schutztüre zu öffnen.

Durch eine Resetfunktion bzw. Restart- / Startfunktion wird die Maschine oder Anlage bzw. das Sicherheitssystem mit dem Sicherheitsschalter zurückgesetzt, so dass ein unmittelbarer Start der Maschine erfolgen kann. Der Start der Maschine wird beispielsweise durch ein Betätigen einer Starttaste des Bedieners eingeleitet. Die Resetfunktion stellt eine Wiederanlaufsperre dar.

Eine Freigabe des Sicherheitsbereiches kann nur durchgeführt werden, wenn sich im Gefahrenbereich bzw. im Sicherheitsbereich keine Personen mehr befinden. Dies wird beispielsweise dadurch festgestellt, dass angeschlossene Sicherheitssensoren keine Personen mehr detektieren, bzw. ein freies Schutzfeld anzeigen, oder beispielsweise dadurch, dass alle Personen nachweislich den Gefahrenbereich bzw. Sicherheitsbereich verlassen haben. Eine Freigabe des Sicherheitsbereiches wird beispielsweise durch eine Tastenbetätigung angezeigt oder automatisch festgestellt.

In einer bevorzugten Ausführung der Erfindung sind der Signalgeber und der Signalempfänger als RFID-System mit RFID-Transponder und RFID-Lesegerät ausgebildet.

Eine RFID-Sende-/Empfangseinheit, welche auch als RFID-Lesegerät bezeichnet wird, weist eine Antennenanordnung zur Kommunikation mit dem Gerät auf, welches beispielsweise einen RFID-Transponder aufweist, wobei der RFID-Transponder mindestens eine Spule zur Wechselwirkung mit der Antennenanordnung der RFID-Sende-/Empfangseinheit umfasst.

RFID-Sende-/Empfangseinheiten (Radio Frequency Identification) werden in Sender/Empfänger-Systemen zum automatischen und berührungslosen Identifizieren und/oder Lokalisieren von RFID-Transpondern mittels magnetischer Koppelung oder Radiowellen verwendet. Ein RFID-System umfasst typischerweise zunächst den RFID-Transponder (auch als "Tag" oder "Funketikett" bezeichnet), der eine Antenne umfasst und sich am oder in dem Gerät befindet. Er umfasst in der Regel einen kennzeichnenden Identifizierungsdaten-Code, der über die Antennenanordnung von der RFID-Empfangseinheit bzw. dem RFID-Lesegerät des RFID-Systems (auch als "Transceiver" bezeichnet) abgefragt werden kann. Die RFID-Sende/Empfangseinheit umfasst dazu die Antennenanordnung und einen Transceiverschaltkreis (z. B. der EM405-Chip der Firma EM Microelectronics) zum Auslesen dieser Kennung von dem RFID-Transponder. Zum Auslesen der Kennung von dem RFID-Transponder erzeugt die RFID-Sende-/Empfangseinheit typischerweise magnetische Wechselfelder, um Signale an den RFID-Transponder zu übertragen. Der RFID-Transponder ist dazu ausgebildet, nach Erhalt eines entsprechenden Signals von der RFID-Sende-/Empfangseinheit Daten, insbesondere die Kennung umfassendes Signal als Antwort an die RFID-Sende-/Empfangseinheit zurückzusenden, welches dieses mit der Auswerteeinheit auswertet und weiterverarbeitet.

Bei RFID-Systemen erzeugt die RFID-Sende-/Empfangseinheit magnetische Wechselfelder, die nicht nur zum Übertragen der Daten vorgesehen sind, sondern auch dazu dienen können, den RFID-Transponder mit Energie zu versorgen.

Ein RFID-System hat damit den Vorteil, dass der RFID-Transponder keine eigene Stromversorgung benötigt und daher flexibel eingesetzt werden kann. Der RFID-Transponder bezieht seine Energie über die magnetische Koppelung, Funkwellen, bzw. Radiowellen aus der RFID-Sende-/Empfangseinheit. Der RFID-Transponder wird über die Antennenanordnung der RFID-Sende-/Empfangseinheit angesprochen und antwortet der RFID-Sende-/Empfangseinheit mit einer in dem RFID-Transponder abgespeicherten Information. Die vom Transponder des RFID-Systems übertragene Information wird von der Antennenanordnung empfangen und kann anschließend in der Auswerteeinheit ausgewertet werden. Die gespeicherte Information auf dem Transponder enthält mindestens eine Kennung, nämlich die Identifizierungsdaten, die den RFID-Transponder identifiziert.

Da die Erkennung des RFID-Transponders über Funkwellen erfolgt, ist das System sehr robust gegenüber Umwelteinflüssen. Daher kann die RFID-Sende-/Empfangseinheit mit dem RFID-Transponder in sehr rauen Umgebungen eingesetzt werden, beispielsweise in Industrieumgebungen, wo Schmierstoffe verwendet werden und es beispielsweise zu einem hohen Verschmutzungsgrad kommen kann.

Da die Erkennung des RFID-Transponders über magnetische Koppelung oder Funkwellen erfolgt, ist im Unterschied zu einer optischen Lösung keine Sichtverbindung zwischen dem ersten Teilkörper und dem zweiten Teilkörper notwendig. Daher können die Teilkörper vollständig gekapselt werden, um diese vor schädlichen Umwelteinflüssen zu schützen.

In Weiterbildung der Erfindung weist die Verriegelungseinheit magnetische und/oder mechanische Verriegelungselemente auf, die eine Rückhalte- bzw. Schließkraft bewirken. Eine magnetische Verriegelungseinheit bzw. magnetische Verriegelungselemente sind verschleißfrei, da keine mechanisch beweglichen Teile vorhanden sind. Eine mechanische Verriegelungseinheit bzw. mechanische Verriegelungselemente können beispielsweise kostengünstiger und robuster und ggf. höhere Verriegelungshaltekräfte aufweisen.

In einer bevorzugten Ausführungsform der Erfindung ist die Auswerteeinheit zweikanalig ausgebildet. Durch eine zweikanalige Auswerteeinheit ist ein redundantes Überprüfungssystem gebildet, um Fehler zu erkennen, die beispielsweise durch einen Quervergleich entdeckt werden. Die Auswerteeinheit weist hierzu beispielsweise zwei Mikrocontroller auf, die über eine Schnittstelle zum Datenaustausch miteinander verbunden sind. Die Auswerteeinheit kann neben einem redundanten Aufbau auch einen diversitären Aufbau aufweisen, wobei beispielsweise zwei unterschiedliche Mikrocontroller eingesetzt werden.

In einer bevorzugten Ausführungsform der Erfindung ist der mobile Identifikationstransponder ein RFID Transponder, insbesondere ein passiver RFID Transponder.

Der Aufbau des Grundgehäuses des Sicherheitsschalters hat den Vorteil, dass die Teilkörper des Grundgehäuses völlig variabel an der Schutzeinrichtung anbringbar sind, so dass z. B. der Sicherheitsschalter nur von außerhalb oder innerhalb der Schutzeinrichtung zugänglich sein kann und dies insbesondere nur mit einem Befestigungselement unabhängig von der Montagesituation. Durch eine beispielsweise formschlüssige Ausbildung der Teilkörper können sie gegenseitig als Anschläge sowohl bei Pendel- als auch bei Schiebetüren dienen.

In Weiterbildung der Erfindung bilden die Erweiterungsmodule zumindest eine hermetische Abdeckung, eine Schließeinheit zum Aufbringen einer zusätzlichen Rückhalte- bzw. Schließkraft, ein Nothalt-Taster zum sicheren Abschalten, eine oder mehrere Zustandsanzeigen, ein Türgriff oder eine kabelgebundene oder kabellose Kommunikationseinheit.

In Weiterbildung der Erfindung ist mindestens eine Lesestation mit einer Aufnahme für den mobilen Identifikationstransponder angeordnet, wobei mindestens ein räumlich begrenzter Zugangsbereich mit der beweglichen Schutzeinrichtung für eine Anlage angeordnet ist, wobei der mobile Identifikationstransponder zum Lesen von Daten von mindestens einer Überprüfungsstation innerhalb eines Sicherheitsbereiches der Anlage ausgebildet ist, wobei die Daten Identifizierungsdaten für die Überprüfungsstation umfassen und wobei der mobile Identifikationstransponder eine Schnittstelle aufweist, mittels der die Daten drahtlos von der Überprüfungsstation zu dem mobilen Identifikationstransponder übertragbar sind, wobei die Überprüfungsstation nur über den Zugangsbereich zugänglich ist, so dass der Zugangsbereich von einer Person mit dem mobilen Identifikationstransponder vor dem Erreichen der Überprüfungsstation und nach dem Verlassen der Überprüfungsstation passierbar ist, wobei die Daten des mobilen Identifikationstransponder an die Lesestation und/oder an eine sichere Steuerung übertragbar sind.

Die Lesestation ist außerhalb des Sicherheitsbereiches angeordnet. Die Lesestation nimmt den mindestens einen Identifikationstransponder in einer Aufnahme auf. Bei der Aufnahme kann es sich beispielsweise um ein Fach oder ein Steckfach handeln. Die Lesestation ist dazu ausgebildet, den Identifikationstransponder auszulesen und die Daten des Identifikationstransponders in einer Auswerteeinheit auszuwerten. Die Lesestation ist weiter dazu ausgebildet, die Anlage direkt oder indirekt zu beeinflussen, also die Anlage zu aktivieren oder zu deaktivieren.

Die Überprüfungsstation ist innerhalb des Sicherheitsbereiches angeordnet. Die Überprüfungsstation ist dabei ortsfest angeordnet, so dass diese nicht entfernt werden kann. Die Überprüfungsstation ist beispielsweise in der Anlage integriert.

Die Überprüfungsstation enthält mindestens Daten zur Identifizierung, die über eine Schnittstelle drahtlos von dem Identifikationstransponder abgerufen werden können. Bei der Schnittstelle handelt es sich bevorzugt um eine Funkschnittstelle.

Gemäß der Weiterbildung muss der Identifikationstransponder immer von der Person mitgeführt werden, um die Überprüfungsstation zu erreichen. Würde die Person den Identifikationstransponder nicht mitführen, kann die Anlage auch nicht wieder aktiviert werden. Nur wenn der Identifikationstransponder an der Überprüfungsstation Daten abrufen oder lesen kann, ist eine spätere Aktivierung der Anlage, nämlich nach Verlassen des Sicherheitsbereiches und nach erneutem Lesen des Identifikationstransponders in der Lesestation möglich. Hierzu wird von der Überprüfungsstation beispielsweise eine Ortskennung oder eine Stationskennung an den Identifikationstransponder übermittelt bzw. durch den Identifikationstransponder von der Überprüfungsstation gelesen.

Die Überprüfung des Identifikationstransponders an der Überprüfungsstation kann automatisch erfolgen. D. h. wenn sich die Person der Überprüfungsstation auf einen bestimmten Mindestabstand genähert hat, werden die Daten der Überprüfungsstation automatisch von dem Identifikationstransponder gelesen.

Die Person, die den Identifikationstransponder mit sich führt, muss optional mit dem Identifikationstransponder selbst an der Überprüfungsstation eine Prüfung vornehmen. Dazu kann beispielsweise vorgesehen sein, dass von der Person eine Aktion, beispielsweise ein Betätigen einer Taste an dem Identifikationstransponder durchgeführt werden muss. Dadurch ist gewährleistet, dass die Überprüfungsstation durch den Identifikationstransponder nicht automatisch überprüft wird, sondern immer eine aktive Handlung der Person notwendig ist, um diese zu überprüfen.

Die Überprüfungsstation kann ebenfalls sehr einfach ausgeführt sein. Die Überprüfungsstation weist im einfachsten Fall einen Speicher und eine Schnittstelle zur Datenbereitstellung auf.

Optional sind mehrere Überprüfungsstationen vorgesehen. Insbesondere bei großen Anlagen bzw. großen Sicherheitsbereichen bzw. große Anlagen mit einer Mehrzahl von Sicherheitsbereichen sind mehrere Überprüfungsstationen vorgesehen. Dabei kann vorgesehen sein, dass der Identifikationstransponder mindestens an einer Überprüfungsstation geprüft werden muss. Jedoch kann es auch vorgesehen sein, dass ein Identifikationstransponder an mehreren Überprüfungsstationen geprüft werden muss. Optional kann es auch vorgesehen sein, dass ein Identifikationstransponder an mehreren Überprüfungsstationen in einer bestimmten Reihenfolge überprüft werden muss.

Die Kommunikation zwischen dem Identifikationstransponder und der Überprüfungsstation kann unidirektional oder bidirektional stattfinden. Im einfachsten Fall genügt ein einfaches Lesen der Daten der Überprüfungsstation. Jedoch kann es auch vorgesehen sein, dass von dem Identifikationstransponder Daten an die Überprüfungsstation geschrieben werden.

Die Identifikationstransponder können dabei auch bestimmten Personen zugewiesen sein, so dass ein bestimmter Identifikationstransponder nur von einer bestimmten Person aufgenommen bzw. mitgenommen werden kann.

In Weiterbildung ist bei einer Entnahme des mobilen Identifikationstransponders aus der Lesestation im mobilen Identifikationstransponder ein Zeitgeber mit einem ersten Zeitwert gestartet.

Damit wird gewährleistet, dass die Person den Sicherheitsbereich innerhalb einer vorgeschriebenen Zeit wieder verlassen hat. Wird diese Zeit nicht eingehalten, kann beispielsweise eine Warnungsmeldung erfolgen, um die betreffende Person zu suchen.

In Weiterbildung ist beim Erreichen der Überprüfungsstation der Zeitgeber überprüfbar und falls der erste Zeitwert unterschritten ist, ein gültiges Erreichen der Überprüfungsstation signalisierbar und falls der erste Zeitwert überschritten wird, ein nicht gültiges Erreichen der Überprüfungsstation signalisierbar.

Dabei wird von dem Identifikationstransponder die Ortskennung bzw. die Stationskennung mit dem ersten Zeitwert verknüpft.

Ist die Zeit überschritten, kann die Anlage nicht gestartet werden. Die Person wird aufgefordert, die Routine erneut zu starten. Die Person entnimmt hierzu erneut den Identifikationstransponder aus der Lesestation, wobei erneut ein erster Zeitwert gesetzt wird. Die Person muss die Überprüfungsstation erneut innerhalb einer ersten Zeit aufsuchen.

In Weiterbildung ist bei Erreichen der Überprüfungsstation durch den mobilen Identifikationstransponder in dem mobilen Identifikationstransponder ein Zeitgeber mit einem zweiten Zeitwert gestartet.

Damit wird weiterhin gewährleistet, dass die Person den Sicherheitsbereich innerhalb einer vorgeschriebenen Zeit wieder verlassen hat. Wird dieser zweite Zeitwert nicht eingehalten, kann beispielsweise eine Warnungsmeldung erfolgen, um die betreffende Person zu suchen.

Die Erfindung wird nachstehend auch hinsichtlich weiterer Vorteile und Merkmale unter Bezugnahme auf die beigefügte Zeichnung anhand von Ausführungsbeispielen erläutert.

Die Figuren der Zeichnung zeigen in:
- Figur 1: ein Sicherheitssystem mit einem Sicherheitsschalter;
- Figur 2: ein Sicherheitssystem mit einem Sicherheitsschalter und einer beweglichen Schutzeinrichtung.

In den nachfolgenden Figuren sind identische Teile mit identischen Bezugszeichen versehen.

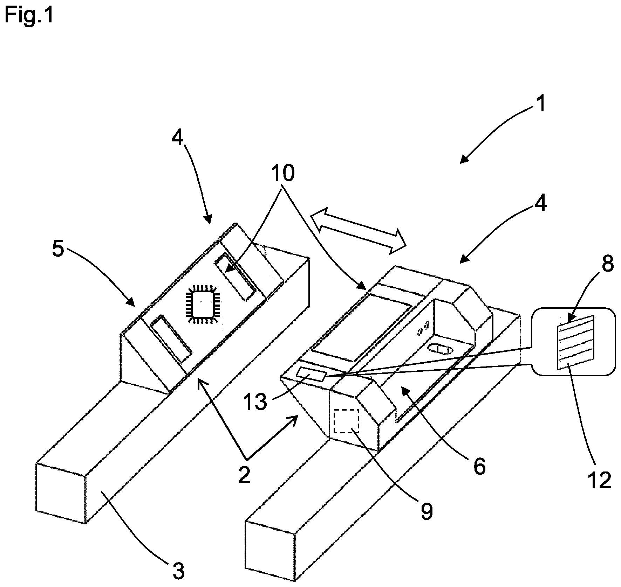

Figur 1 zeigt ein Sicherheitssystem 1 mit einem Sicherheitsschalter 2 zum Überwachen eines sicheren Schutzeinrichtungszustandes einer beweglichen Schutzeinrichtung 3, mit einem Grundgehäuse 4, das aus zumindest zwei Teilkörpern 5 und 6 besteht, die zueinander positionierbar sind, wobei ein Signalempfänger in einem Teilkörper 6 und ein Signalgeber in dem anderen Teilkörper 5 vorgesehen sind, so dass ein sicherer Zustand der Schutzeinrichtung 3 mittels einer Auswerteeinheit 9 erfassbar ist, mit einer Verriegelungseinheit 10 mit mindestens einem Verriegelungselement zum Verriegeln oder Entriegeln der Schutzeinrichtung 3, wobei mindestens ein mobiler Identifikationstransponder 12 vorgesehen ist, mindestens eine im Sicherheitsschalter 2 angeordnete Transponder-Leseeinheit 13, welche mit der Auswerteeinheit 9 verbunden ist, wobei die Auswerteeinheit 9 oder eine externe zentrale Steuereinheit ausgebildet ist, nach Überprüfung und Verifikation des vom Identifikationstransponder 12 empfangenen Transpondersignals die Verriegelungseinheit 10 zu entriegeln oder verriegeln.

Gemäß Figur 1 ist der mobile Identifikationstransponder 12 ein RFID Transponder, insbesondere ein passiver RFID Transponder.

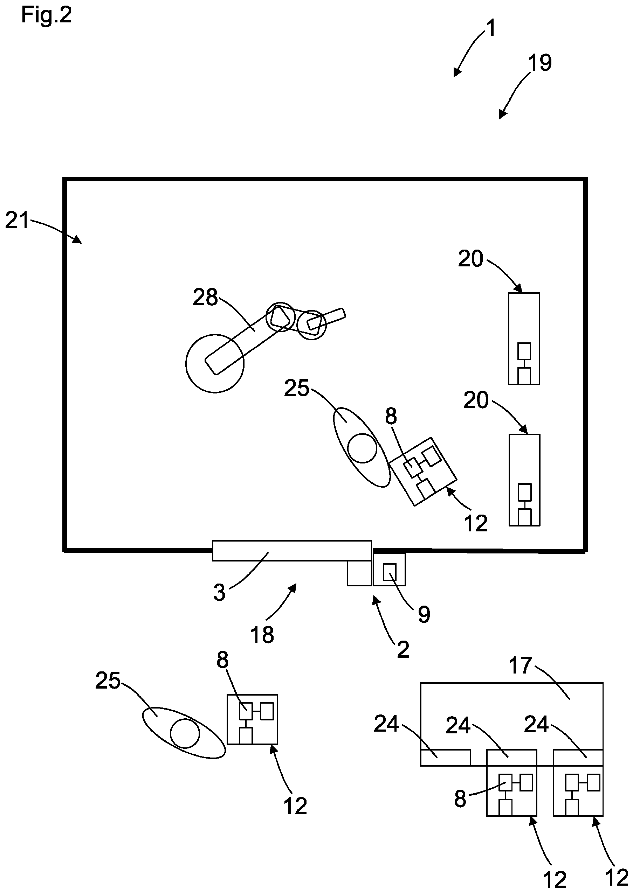

Bei der Anlage 19 kann es sich gemäß Figur 2 beispielsweise um eine Industrieanlage zur Herstellung von Produkten handeln. Bei der Anlage 19 kann es sich auch um einen Teil einer Maschine oder um eine Anlage 19 mit mehreren Maschinen handeln. Die Anlage 19 weist einen Sicherheitsbereich 21 auf, der nicht von Personen 25 betreten werden darf, wenn die Anlage 19 aktiv ist, da die Person 25 durch Teile der Anlage 19 gefährdet werden kann. Beispielsweise sind in der Anlage 19 ein oder mehrere Roboter 28 angeordnet, deren gefährlicher Wirkungsbereich innerhalb des Sicherheitsbereiches 21 liegt.

Der Identifikationstransponder 12 gemäß Figur 2 kann sehr einfach ausgebildet sein. Es handelt sich beispielsweise um ein handliches Gerät, das problemlos von der Person 25 getragen bzw. mitgeführt werden kann. Optional weist der Identifikationstransponder 12 Bedienelemente und mindestens ein Anzeigeelement auf.

Weiter weist der Identifikationstransponder 12 beispielsweise eine Auswerteeinheit 8 auf. Die Auswerteeinheit 8 ist beispielsweise durch einen Mikrocontroller gebildet. Weiter weist der Identifikationstransponder 12 einen Speicher auf, um Daten auf dem Identifikationstransponder 12 abzuspeichern.

Weiter ist die Auswerteeinheit 9 des Sicherheitsschalters ausgebildet, eine Aufforderung zum Stopp der Maschine an eine Maschinensteuerung zu übergeben.

Gemäß Figur 2 kann sich eine Person 25 über den Identifikationstransponder 12 bzw. einem persönlichen Chip mittels einer Identifikation identifizieren. Entsprechend einem Rechteprofil dieses persönlichen Identifikationstransponders 12 ist die Auswerteeinheit 9 dazu ausgebildet beispielsweise zu entscheiden, ob eine Person 25 berechtigt ist, einen Stopp der Maschine bzw. Anlage 19 anzufordern sowie die Türe bzw. Schutzeinrichtung 3 zu öffnen.

Über eine Resetfunktion bzw. Startfunktion wird die Maschine oder Anlage 19 bzw. das Sicherheitssystem 1 mit dem Sicherheitsschalter 2 zurückgesetzt, so dass ein unmittelbarer Start des Roboters 28 erfolgen kann. Der Start des Roboters 28 wird beispielsweise durch ein Betätigen einer Starttaste des Bedieners eingeleitet. Die Resetfunktion stellt eine Wiederanlaufsperre dar.

Eine Freigabe des Sicherheitsbereiches 21 kann nur durchgeführt werden, wenn sich im Gefahrenbereich bzw. im Sicherheitsbereich 21 keine Personen 25 mehr befinden. Dies wird beispielsweise dadurch festgestellt, dass angeschlossene Sicherheitssensoren keine Personen 25 mehr detektieren, bzw. ein freies Schutzfeld anzeigen, oder beispielsweise dadurch, dass alle Personen nachweislich den Gefahrenbereich bzw. Sicherheitsbereich 21 verlassen haben. Eine Freigabe des Sicherheitsbereiches 21 wird beispielsweise durch eine Tastenbetätigung angezeigt oder automatisch festgestellt.

Gemäß Figur 2 ist mindestens eine Lesestation 17 mit mindestens einer Aufnahme 24 für den mobilen Identifikationstransponder 12 angeordnet, wobei mindestens ein räumlich begrenzter Zugangsbereich mit der beweglichen Schutzeinrichtung 3 für die Anlage angeordnet ist, wobei der mobile Identifikationstransponder 12 zum Lesen von Daten von mindestens einer Überprüfungsstation 20 innerhalb eines Sicherheitsbereiches 21 der Anlage ausgebildet ist, wobei die Daten Identifizierungsdaten für die Überprüfungsstation 20 umfassen und wobei der mobile Identifikationstransponder 12 eine Schnittstelle aufweist, mittels der die Daten drahtlos von der Überprüfungsstation 20 zu dem mobilen Identifikationstransponder 12 übertragbar sind, wobei die Überprüfungsstation 20 nur über den Zugangsbereich 18 zugänglich ist, so dass der Zugangsbereich 18 von einer Person 25 mit dem mobilen Identifikationstransponder 12 vor dem Erreichen der Überprüfungsstation 20 und nach dem Verlassen der Überprüfungsstation 20 passierbar ist, wobei die Daten des mobilen Identifikationstransponders 12 an die Lesestation 17 und/oder an eine sichere Steuerung übertragbar sind.

Die Überprüfungsstation 20 ist innerhalb des Sicherheitsbereiches 21 angeordnet. Die Überprüfungsstation 20 ist dabei ortsfest angeordnet, so dass diese nicht entfernt werden kann. Die Überprüfungsstation 20 ist beispielsweise in der Anlage 19 integriert.

Auf dem Transponder sind Identifikationsdaten vorgesehen. Die Schnittstelle zwischen Überprüfungsstation und zentralen Steuerung oder dem Sicherheitsschalter ist typischerweise kabelgebunden. Die Übertragung zwischen Transponder und Überprüfungsstation ist beispielsweise per magnetischer Koppelung, Funkwelle oder Radiowelle möglich.

Die Überprüfungsstation 20 kann ebenfalls sehr einfach ausgeführt sein. Die Überprüfungsstation 20 weist im einfachsten Fall einen Speicher und eine Schnittstelle zur Datenbereitstellung auf.

Optional sind mehrere Überprüfungsstationen 20 vorgesehen. Insbesondere bei großen Anlagen 19 bzw. großen Sicherheitsbereichen 21 bzw. großen Anlagen 19 mit einer Mehrzahl von Sicherheitsbereichen 21 sind mehrere Überprüfungsstationen 20 vorgesehen. Dabei kann vorgesehen sein, dass der Identifikationstransponder 12 mindestens an einer Überprüfungsstation 20 geprüft werden muss. Jedoch kann es auch vorgesehen sein, dass ein Identifikationstransponder 12 an mehreren Überprüfungsstationen 20 geprüft werden muss. Optional kann es auch vorgesehen sein, dass ein Identifikationstransponder 12 an mehreren Überprüfungsstationen 20 in einer bestimmten Reihenfolge überprüft werden muss.

Optional ist es vorgesehen, dass die Identifikationstransponder 12 nur von autorisierten Personen aus der Lesestation 17 entnommen werden können. Beispielsweise müssen sich die autorisierten Personen 25 wie Bedienpersonen oder Servicepersonen mit Hilfe einer elektronischen Identitätskarte oder mit Hilfe anderer Identifikationsmitteln an der Lesestation 17 anmelden, um einen Identifikationstransponder 12 zu erhalten. Bei der Entnahme des Identifikationstransponders 12 wird beispielsweise von der Lesestation 17 eine Startkennung an den Identifikationstransponder 12 gesendet.

Die Identifikationstransponder 12 können dabei auch bestimmten Personen 25 zugewiesen sein, so dass ein bestimmter Identifikationstransponder 12 nur von einer bestimmten Person 25 aufgenommen bzw. mitgenommen werden kann.

### Bezugszeichen:

1 Sicherheitssystem
2 Sicherheitsschalter
3 bewegliche Schutzeinrichtung
4 Grundgehäuse
5 Teilkörper
6 Teilkörper
8 Auswerteeinheit
9 Auswerteeinheit
10 Verriegelungseinheit
12 mobiler Identifikationstransponder
13 Transponder-Leseeinheit
17 Lesestation
18 Zugangsbereich
19 Anlage
20 Überprüfungsstation
21 Sicherheitsbereich
24 Aufnahme
25 Person
28 Roboter

## Patentansprüche

1. Sicherheitssystem (1) mit einem Sicherheitsschalter (2) zum Überwachen eines sicheren Schutzeinrichtungszustandes einer beweglichen Schutzeinrichtung (3), mit einem Grundgehäuse (4), das aus zumindest zwei Teilkörpern (5, 6) besteht, die zueinander positionierbar sind, wobei ein Signalempfänger (7) in einem Teilkörper (5) und ein Signalgeber (8) in dem anderen Teilkörper (6) vorgesehen sind, so dass ein sicherer Zustand der Schutzeinrichtung (3) mittels einer Auswerteeinheit (9) erfassbar ist,
mit einer Verriegelungseinheit (10) mit mindestens einem Verriegelungselement zum Verriegeln oder Entriegeln der Schutzeinrichtung (3),
**dadurch gekennzeichnet, dass**
mindestens ein mobiler Identifikationstransponder (12) vorgesehen ist, mindestens eine im Sicherheitsschalter (2) angeordnete Transponder-Leseeinheit (13), welche mit der Auswerteeinheit (9) verbunden ist, wobei die Auswerteeinheit (9) oder eine externe zentrale Steuereinheit ausgebildet ist, nach Überprüfung und Verifikation des vom Identifikationstransponder (12) empfangenen Transpondersignals die Verriegelungseinheit (10) zu entriegeln oder verriegeln.

2. Sicherheitssystem nach Anspruch 1, **dadurch gekennzeichnet, dass** mindestens die Kommunikation zwischen der Transponder-Leseeinheit (13) und dem mobilen Identifikationstransponder (12) sicherheitsgerichtet ist.

3. Sicherheitssystem nach mindestens einem der vorhergehenden Ansprüche,
**dadurch gekennzeichnet, dass** mittels des mobilen Identifikationstransponders (12) ein Stoppbefehl, eine Resetfunktion, eine Restartfunktion, und/oder eine Freigabe eines Sicherheitsbereichs (21) ausführbar ist.

4. Sicherheitssystem nach mindestens einem der vorhergehenden Ansprüche,
**dadurch gekennzeichnet, dass** der Signalgeber und der Signalempfänger als RFID-System mit RFID-Transponder und RFID-Lesegerät ausgebildet sind.

5. Sicherheitssystem nach mindestens einem der vorhergehenden Ansprüche,
**dadurch gekennzeichnet, dass** die Verriegelungseinheit (10) magnetische und/oder mechanische Verriegelungselemente aufweisen, die eine Rückhalte- bzw. Schließkraft bewirken.

6. Sicherheitssystem nach mindestens einem der vorhergehenden Ansprüche,
**dadurch gekennzeichnet, dass** der mobile Identifikationstransponder (12) ein RFID Transponder ist.

7. Sicherheitssystem nach mindestens einem der vorhergehenden Ansprüche,
**dadurch gekennzeichnet, dass** der mobile Identifikationstransponder (12) ein passiver RFID Transponder ist.

8. Sicherheitssystem nach mindestens einem der vorhergehenden Ansprüche,
**dadurch gekennzeichnet, dass** es mit Erweiterungsmodulen ausgestattet werden kann, wobei die Erweiterungsmodule zumindest eine hermetische Abdeckung, eine Schließeinheit zum Aufbringen einer zusätzlichen Rückhalte- bzw. Schließkraft, ein Nothalt-Taster zum sicheren Abschalten, eine oder mehrere Zustandsanzeigen, ein Türgriff oder eine kabelgebundene oder kabellose Kommunikationseinheit bilden.

9. Sicherheitssystem nach mindestens einem der vorhergehenden Ansprüche, **dadurch gekennzeichnet, dass** mindestens eine Lesestation (17) mit einer Aufnahme (24) für den mobilen Identifikationstransponder (12) angeordnet ist,
wobei mindestens ein räumlich begrenzter Zugangsbereich (18) mit der beweglichen Schutzeinrichtung (3) für eine Anlage (19) angeordnet ist,
wobei der mobile Identifikationstransponder (12) zum Lesen von Daten von mindestens einer Überprüfungsstation (20) innerhalb eines Sicherheitsbereiches (21) der Anlage (19) ausgebildet ist, wobei die Daten Identifizierungsdaten für die Überprüfungsstation (20) umfassen und wobei der mobile Identifikationstransponder (12) eine Schnittstelle aufweist, mittels der die Daten drahtlos von der Überprüfungsstation (20) zu dem mobilen Identifikationstransponder (12) übertragbar sind, wobei
die Überprüfungsstation (20) nur über den Zugangsbereich (18) zugänglich ist, so dass der Zugangsbereich (18) von einer Person (25) mit dem mobilen Identifikationstransponder (12) vor dem Erreichen der Überprüfungsstation (20) und nach dem Verlassen der Überprüfungsstation (20) passierbar ist, wobei die Daten des mobilen Identifikationstransponders (12) an die Lesestation (17) und/oder an eine sichere Steuerung übertragbar sind.

10. Sicherheitssystem nach mindestens einem der vorhergehenden Ansprüche,
**dadurch gekennzeichnet, dass** bei einer Entnahme des mobilen Identifikationstransponders (12) aus der Lesestation (17) im mobilen Identifikationstransponder (12) ein Zeitgeber mit einem ersten Zeitwert gestartet ist.

11. Sicherheitssystem nach mindestens einem der vorhergehenden Ansprüche,
**dadurch gekennzeichnet, dass** beim Erreichen der Überprüfungsstation (20) der Zeitgeber überprüfbar ist und falls der erste Zeitwert unterschritten ist, ein gültiges Erreichen der Überprüfungsstation (20) signalisierbar ist und falls der erste Zeitwert überschritten wird, ein nicht gültiges Erreichen der Überprüfungsstation (20) signalisierbar ist.

12. Sicherheitssystem nach mindestens einem der vorhergehenden Ansprüche,
**dadurch gekennzeichnet, dass** bei Erreichen der Überprüfungsstation (20) durch den mobilen Identifikationstransponder (12) in dem mobilen Identifikationstransponder (12) ein Zeitgeber mit einem zweiten Zeitwert gestartet ist.

## Claims

1. Safety system (1) having a safety switch (2) for monitoring a safe protective device state of a movable protective device (3), having a basic housing (4) which comprises at least two partial bodies (5, 6) which can be positioned relative to one another, a signal receiver (7) being provided in one partial body (5) and a signal transmitter (8) being provided in the other partial body (6), so that a safe state of the protective device (3) can be detected by means of an evaluation unit (9), with a locking unit (10) with at least one locking element for locking or unlocking the protective device (3), **characterized in that** at least one mobile identification transponder (12) is provided, at least one transponder reading unit (13) arranged in the safety switch (2), which unit is connected to the evaluation unit (9), the evaluation unit (9) or an external central control unit being designed to unlock or lock the locking unit (10) after checking and verifying the transponder signal received from the identification transponder (12).

2. Safety system according to claim 1, **characterized in that** at least the communication between the transponder reading unit (13) and the mobile identification transponder (12) is safety-oriented.

3. Safety system according to at least one of the preceding claims, **characterized in that** a stop command, a reset function, a restart function, and/or a release of a security area (21) can be executed by means of the mobile identification transponder (12).

4. Safety system according to at least one of the preceding claims, **characterized in that** the signal transmitter and the signal receiver are designed as an RFID system with RFID transponder and RFID reader.

5. Safety system according to at least one of the preceding claims, **characterized in that** the locking unit (10) has magnetic and/or mechanical locking elements which effect a restraining or closing force.

6. Safety system according to at least one of the preceding claims, **characterized in that** the mobile identification transponder (12) is an RFID transponder.

7. Safety system according to at least one of the preceding claims, **characterized in that** the mobile identification transponder (12) is a passive RFID transponder.

8. Safety system according to at least one of the preceding claims, **characterized in that** it can be equipped with extension modules, the extension modules forming at least one hermetic cover, a closing unit for applying an additional restraining or closing force, an emergency stop button for safe switching off, one or more status indicators, a door handle or a wired or wireless communication unit.

9. Safety system according to at least one of the preceding claims, **characterized in that** at least one reading station (17) with a receptacle (24) for the mobile identification transponder (12) is arranged, at least one spatially limited access area (18) with the mobile protective device (3) for an installation (19) being arranged, wherein the mobile identification transponder (12) is adapted to read data from at least one verification station (20) within a safety area (21) of the facility (19), wherein the data comprises identification data for the verification station (20), and wherein the mobile identification transponder (12) has an interface, by means of which the data can be transmitted wirelessly from the checking station (20) to the mobile identification transponder (12), the checking station (20) being accessible only via the access area (18), so that the access area (18) can be passed by a person (25) with the mobile identification transponder (12) before reaching the checking station (20) and after leaving the checking station (20), the data of the mobile identification transponder (12) being transferable to the reading station (17) and/or to a safe controller.

10. Safety system according to at least one of the preceding claims, **characterized in that**, when the mobile identification transponder (12) is removed from the reading station (17) a timer with a first time value is started in the mobile identification transponder (12).

11. Safety system according to at least one of the preceding claims, **characterized in that**, when the verification station (20) is reached, the timer can be checked and, if the value falls below the first time value, a valid reaching of the verification station (20) can be signalled and, if the first time value is exceeded, an invalid reaching of the verification station (20) can be signalled.

12. Safety system according to at least one of the preceding claims, **characterized in that**, when the mobile identification transponder (12) reaches the verification station (20), a timer with a second time value is started in the mobile identification transponder (12).

## Revendications

1. Système de sécurité (1) comportant un interrupteur de sécurité (2) pour surveiller un état de dispositif de protection de sécurité d'un dispositif de protection mobile (3), un boîtier de base (4) qui comporte au moins deux corps partiels (5, 6) pouvant être positionnés l'un par rapport à l'autre, un récepteur de signaux (7) étant prévu dans un corps partiel (5) et un émetteur de signaux (8) étant prévu dans l'autre corps partiel (6), afin de détecter un état sûr du dispositif de protection (3) par une analyse (9), avec une unité de verrouillage (10) avec au moins un élément de verrouillage pour verrouiller ou déverrouiller le dispositif de protection (3), **caractérisée en ce qu'**il est prévu au moins un transpondeur mobile d'identification (12), au moins une unité de lecture de transpondeur (13) disposée dans l'interrupteur de sécurité (2), et l'unité est reliée à l'analyseur (9), l'unité d'analyse (9) ou une unité centrale externe étant conçue pour débloquer ou bloquer l'unité de verrouillage (10) après vérification du signal du transpondeur reçu du transpondeur (12).

2. Système de sécurité selon la revendication 1, **caractérisé en ce qu'**au moins la communication entre l'unité de lecture de transpondeur (13) et le transpondeur mobile d'identification (12) est orientée sur la sécurité.

3. Système de sécurité selon au moins l'une des revendications précédentes, **caractérisé en ce qu'**un ordre d'arrêt, une fonction de remise à zéro, une fonction de redémarrage et/ou un déclenchement d'une zone de sécurité (21) peuvent être exécutés au moyen du transpondeur mobile d'identification (12).

4. Système de sécurité selon au moins l'une des revendications précédentes, **caractérisé en ce que** l'émetteur de signaux et le récepteur de signaux sont conçus comme un système RFID avec transpondeur RFID et lecteur RFID.

5. Système de sécurité selon au moins l'une des revendications précédentes, **caractérisé en ce que** l'unité de verrouillage (10) présente des éléments de verrouillage magnétiques et/ou mécaniques qui induisent une force de retenue ou de fermeture.

6. Système de sécurité selon au moins l'une des revendications précédentes, **caractérisé en ce que** le transpondeur mobile d'identification (12) est un transpondeur RFID.

7. Système de sécurité selon au moins l'une des revendications précédentes, **caractérisé en ce que** le transpondeur mobile d'identification (12) est un transpondeur RFID passif.

8. Système de sécurité selon au moins l'une des revendications précédentes, **caractérisé en ce qu'**il peut être équipé de modules d'extension, les modules d'extension formant au moins un couvercle hermétique, une unité de fermeture pour appliquer une force de retenue ou de fermeture supplémentaire, un bouton d'arrêt d'urgence pour une coupure sûre, un ou plusieurs indicateurs d'état, une poignée de porte ou une unité de communication filaire ou radio.

9. Système de sécurité selon au moins l'une des revendications précédentes, **caractérisé en ce qu'**au moins une station de lecture (17) avec un réceptacle (24) pour le transpondeur mobile d'identification (12) est disposée, au moins une zone d'accès (18) avec le dispositif de protection mobile (3) pour une installation (19) étant disposée, le transpondeur mobile d'identification (12) pouvant lire des données depuis au moins une station de vérification (20) dans un espace de sécurité (21) de l'installation (19), les données comprenant les données d'identification pour la station de vérification (20), et dans lequel le transpondeur d'identification mobile (12) présente une interface par laquelle les données peuvent être transmises sans fil de la station de contrôle (20) au transpondeur d'identification mobile (12), la station de contrôle (20) étant accessible uniquement via la zone d'accès (18), de sorte que la zone d'accès (18) peut être passée par une personne (25) avec le transpondeur d'identification mobile (12) avant l'arrivée dans la station de contrôle (20) et après avoir quitté la station de contrôle (20), les données du transpondeur d'identification mobile (12) étant transmis à la station de lecture (17) et/ou à une commande sûre.

10. Système de sécurité selon au moins l'une des revendications précédentes, **caractérisé en ce que**, lorsque le transpondeur d'identification mobile (12) est retiré de la station de lecture (17), une minuterie avec une première valeur de temps est lancée dans le transpondeur d'identification mobile (12).

11. Système de sécurité selon au moins l'une des revendications précédentes, **caractérisé en ce que**, lorsque la station de vérification (20) est atteinte, la minuterie peut être contrôlée et, si la valeur tombe en dessous de la première valeur temps, un accès valide de la station de vérification (20) peut être signalé et, si la première valeur temps est dépassée, un accès incorrect de la station de vérification (20) peut être signalé.

12. Système de sécurité selon au moins l'une des revendications précédentes, **caractérisé en ce que**, lorsque le transpondeur mobile d'identification (12) atteint la station de vérification (20), une minuterie avec une deuxième valeur de temps est démarrée dans le transpondeur mobile d'identification (12).
